Europäisches Patentamt

European Patent Office

Office européen des brevets

(19)

(11) Numéro de publication: **0 079 444**
**A1**

## (12) DEMANDE DE BREVET EUROPEEN

(21) Numéro de dépôt: 82108668.3

(22) Date de dépôt: 20.09.82

(51) Int. Cl.³: **B 65 G 53/66**
**C 21 B 5/00**

(30) Priorité: 19.10.81 LU 83701

(43) Date de publication de la demande:
25.05.83 Bulletin 83/21

(84) Etats contractants désignés:
BE DE FR GB IT NL SE

(71) Demandeur: PAUL WURTH S.A.
32 rue d'Alsace
L-1122 Luxembourg(LU)

(72) Inventeur: Ulveling, Léon
rue Dr Jos Peffer
Howald(LU)

(74) Mandataire: Meyers, Ernest et al,
Office de Brevets Freylinger & Associés 46 rue du
Cimetière B.P. 1153
L-1011 Luxembourg(LU)

(54) Dispositif de contrôle du contenue et du remplissage d'un réservoir de distribution de matières pulvérulentes.

(57) Afin de pouvoir déterminer le poids d'un réservoir de distribution (4), ce réservoir (4), ainsi qu'un réservoir (12) en amont reposent chacun sur des pesons (46, 48) produisant des signaux correspondant au poids de leur contenu, tandis qu'il est prévu entre les deux clapets (14), (16) un joint réglable (50) permettant, soit de connecter les deux réservoirs (4, 12) entre eux, de manière étanche par rapport à l'extérieur, soit de les libérer totalement l'un de l'autre. Le dispositif convient particulièrement pour l'injection de poudre de charbon dans un haut fourneau.

FIG.1

EP 0 079 444 A1

### Dispositif de contrôle du contenu et du remplissage d'un réservoir de distribution de matières pulvérulentes

La présente invention concerne un dispositif de contrôle du contenu et du remplissage d'un réservoir de distribution de matières pulvérulentes opérant sous pression et pourvu, du côté aval, d'une série d'orifices d'extraction de la matière pulvérulente et relié, du côté amont, à un réservoir intermédiaire d'alimentation en matière pulvérulente qui est conçu comme sas pour être alternativement aéré et mis sous une pression sensiblement égale ou supérieure à la pression du réservoir de distribution et être mis en communication avec celui-ci, et qui est séparé du réservoir de distribution par deux clapets.

Quoique n'y étant pas limitée, l'invention a trait plus particulièrement à une installation du genre décrit dans la demande de brevet européen No 0 021 222 conçue pour l'injection de poudre de charbon ou de lignite dans un haut fourneau. Dans cette installation, la poudre de charbon ou de lignite est extraite par le fond du réservoir de distribution à travers les orifices d'extraction pourvus de sas de soufflage à rotor alvéolaire pour être acheminée ensuite, par voie pneumatique, vers chacune des tuyères du haut fourneau et être injectée dans celui-ci.

Pour assurer une injection continue, il faut surveiller en permanence le niveau du réservoir de distribution afin de pouvoir le remplir lorsque son contenu tombe en-dessous d'un minimum prédéterminé. Jusqu'à présent, on a effectué cette surveillance moyennant des sondes de niveau, comme par exemple, dans la demande de brevet précitée. Toutefois, ces sondes de niveau, par exemple des sondes à rayonnement, ont l'inconvénient de ne fournir qu'une indication peu précise de la quantité, ou du poids de charbon contenu dans l'enceinte. Or, étant donné que le dosage est effectué par voie pondérale, il est souhaitable que cette surveillance du contenu se fasse également en fonction du poids du contenu dans le réservoir de distribution, d'autant plus que, suivant la courbe de niveau de remplissage, un niveau maximal ou minimal prédéterminé ne correspond pas toujours au même poids de charbon contenu dans le réservoir.

Le but de la présente invention est de prévoir un dispositif de contrôle du contenu du genre décrit dans le préambule, dans lequel la surveillance du contenu du réservoir de distribution est basé sur le poids du contenu de celui-ci.

Pour atteindre cet objectif, le dispositif proposé par l'invention est caractérisé en ce que le réservoir de distribution et le réservoir intermédiaire reposent chacun sur des pesons produisant des signaux correspondant au poids de leur contenu et en ce qu'il est prévu entre les deux clapets un joint réglable permettant, soit de connecter les deux réservoirs entre eux de manière étanche par rapport à l'extérieur, soit de les libérer totalement l'un de l'autre.

Selon un mode de réalisation préféré, le joint est constitué par un joint extensible prévu sur une première tubulure, solidaire de l'un des réservoirs et disposé concentriquement par rapport à une deuxième tubulure, solidaire de l'autre réservoir, alors qu'il est prévu des moyens pour appliquer le joint extensible de manière étanche contre la deuxième tubulure.

La deuxième tubulure, contre laquelle est appliqué le joint extensible, peut être disposée à l'intérieur ou à l'extérieur de la première tubulure. Cette première tubulure peut être celle qui est solidaire du réservoir de distribution, ou bien celle qui est solidaire du réservoir intermédiaire.

Les moyens pour appliquer le joint contre la tubulure comportent une source de gaz sous pression pour gonfler le joint. Celui-ci est de préférence en caoutchouc.

D'autres particularités et caractéristiques ressortiront de la description détaillée d'un mode de réalisation présenté, ci-dessous, à titre d'illustration, en référence aux dessins, dans lesquels :

La figure 1 montre une vue schématique d'un dispositif selon la présente invention et

La figure 2 montre schématiquement une coupe verticale à travers un joint extensible tel que proposé par l'invention.

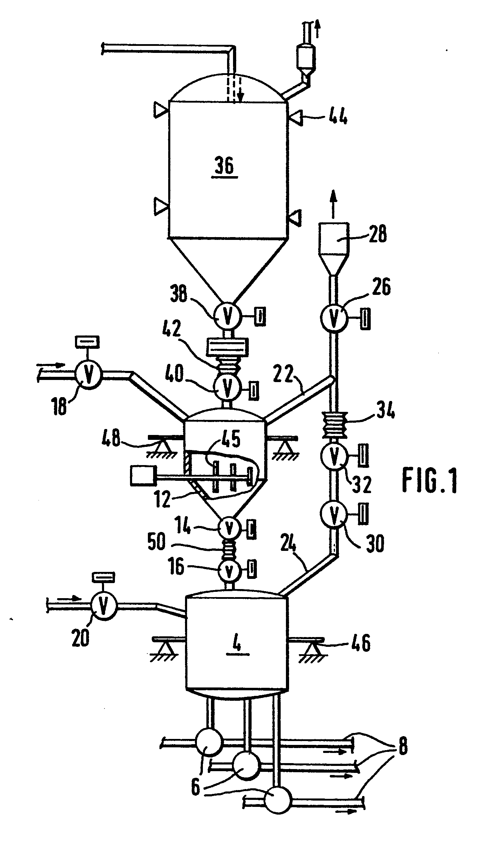

On va d'abord décrire l'installation, dans son ensemble, en référence à la figure 1. Sur celle-ci, la référence 4 représente un réservoir de distribution dans lequel la matière pulvérulente, en l'occurrence de la poudre de charbon ou de lignite, est stockée en vue de l'injection dans un four à cuve, non représenté, par exemple un haut fourneau. La matière pulvérulente est extraite du réservoir 4 à travers une série de sas de soufflage à rotor alvéolaire représentéspar la référence 6, tandis que le transport et l'injection sont effectués par voie pneumatique à travers des conduites 8 alimentées par un fluide de propulsion, par exemple de l'air comprimé.

La référence 12 désigne un réservoir intermédiaire servant au remplissage du réservoir 4. La communication entre le réservoir 12 et le réservoir 4 est établie à travers une paire de clapets 14 et 16, commandés automatiquement par des systèmes de détection du contenu dans les réservoirs 4 et 12, expliqués plus en détail par la suite.

Les réservoirs 12 et 4 sont reliés à des sources d'air comprimé à travers des vannes automatiques 18 respectivement 20, afin d'assurer la pression nécessaire dans ces deux réservoirs. Ces deux réservoirs 12 et 4 sont également pourvus de conduites d'aération 22 respectivement 24 débouchant dans une conduite commune pourvue d'un clapet commun automatique 26 et d'un filtre 28. Dans la conduite 24 se trouvent également deux clapets automatiques 30 et 32 ainsi qu'un compensateur 34.

La référence 36 désigne un réservoir de stockage à partir duquel s'effectue le remplissage du réservoir intermédiaire 12. La communication et la déconnexion entre ces deux réservoirs 36 et 12 est réalisée à l'aide de deux clapets 38 et 40 séparés par un compensateur 42. Des sondes de niveau maximales et minimales sont représentées par la référence 44 permettent de surveiller l'état de remplissage de ce réservoir de stockage 36.

Afin d'assurer un remplissage aussi rapide que possible du réservoir 4 on a prévu un dispositif mélangeur 45 dans le réservoir 12. Ce dispositif mélangeur 45 est actionné automatiquement lorsque le contenu du réservoir 12 est transféré dans le réservoir 4.

Pour permettre d'effectuer un contrôle et une surveillance permanente du contenu des réservoirs 4 et 12 , ces réservoirs sont suspendus sur des pesons 46, 48 qui fournissent en permanence des indications, par exemple, sous forme de signaux électriques, du poids du contenu de chacun de ces deux réservoirs. Pour chacun de ces deux réservoirs 4 et 12 on prévoit, par exemple, trois pesons, pouvant être des capteurs de pression ou des extensomètres bien connus en soi.

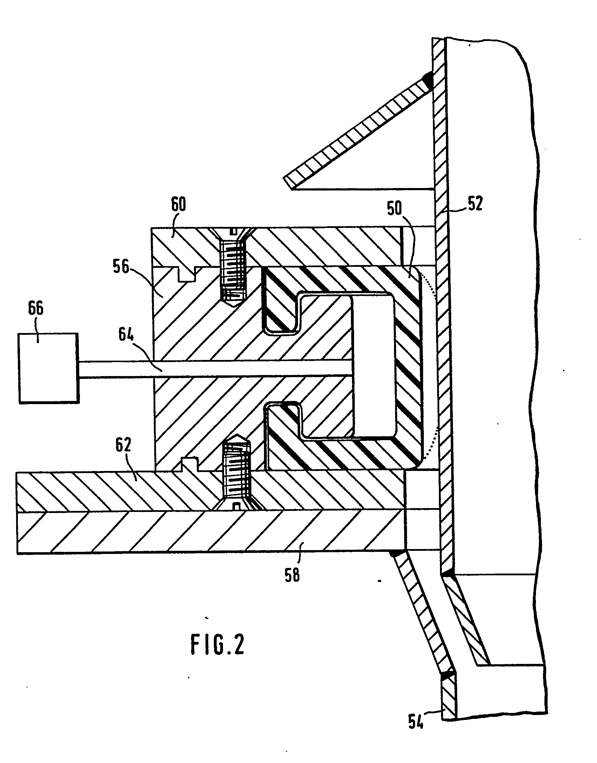

Afin de pouvoir peser indépendamment les réservoirs 4 et 12, et sans que les mesures ne soient faussées par les pressions, il est nécessaire de séparer complètement ces deux réservoirs 4 et 12. Ceci est effectué à l'aide d'un joint extensible désigné par 50 prévu entre les deux clapets 14 et 16 et décrits plus en détail en référence à la figure 2. Pour les mêmes raisons, il est nécessaire de séparer le réservoir 12 du réservoir 36. Cette séparation est matérialisée par le compensateur 42. Quoi qu'il soit possible de prévoir ici également un joint extensible analogue au joint 50, il suffit de prévoir ici un simple compensateur à soufflets. La raison est que ce compensateur 42 se trouve toujours sous pression sensiblement atmosphérique, tandis que la pression entre les deux clapets 14 et 16 peut atteindre 5 à 6 bars auxquels un compensateur à soufflets ne peut que difficilement résister. Le compensateur 34 dans la conduite 24 a les mêmes fonctions que le joint extensible 50 et le compensateur 42.

On va maintenant décrire sommairement le fonctionnement du système illustré sur la figure 1. On va d'abord supposer que le réservoir 4 est en cours de vidange et qu'il est isolé du réservoir 12 par la fermeture des clapets 14 et 16, ce réservoir 12 étant en phase de remplissage. Le réservoir 4 est également isolé de l'atmosphère par les clapets fermés 30 et 32. Le clapet 20 est ouvert et maintient une pression suffisante à l'intérieur du réservoir 4 pour entraîner la matière pulvérulente dans les conduites 8.

Si la pression venait à dépasser un seuil prédéterminé à l'intérieur du réservoir 4, les clapets 30 et 32 s'ouvrent automatiquement pour ramener la pression à la valeur de consigne.

Lors de la phase de vidange du réservoir 4, le réservoir 12 se trouve sous pression atmosphérique et en communication à travers les clapets ouverts 38 et 40 avec le réservoir 36 en vue de son remplissage. Pendant le remplissage du réservoir 12 le clapet 18 est fermé alors que le clapet 26 est ouvert. Quand le réservoir 12 est plein, ce qui est signalé par les pesons 48, les clapets 26, 38 et 40 sont fermés, tandis que le réservoir 12 est mis,à travers le clapet 18, sous pression légèrement supérieure à celle régnant dans le réservoir 4.

Lorsque le poids du contenu du réservoir 4 tombe en-dessous d'un seuil prédéterminé, ce qui est signalé par les pesons 46, le dispositif mélangeur 45 est mis en route, tandis que les clapets 14,16,18,30,32 sont ouverts tandis que le clapet 20 est fermé. Dès cet instant, le contenu du réservoir 12 est entraîne, sous l'action de la pression délivrée par le clapet 18 en un temps minimal dans le réservoir 4. Il est à noter que, pendant la phase de remplissage de ce réservoir 4, la matière pulvérulente continue à être entraînée dans les conduites 8 sous l'action de la pression maintenue par le clapet 18. L'excédent d'air comprimé provoquant le transfert de la matière pulvérulente du réservoir 12 vers le réservoir 4 peut être recyclé à travers les clapets 30 et 32 dans le réservoir 12.

Dès que le contenu du réservoir 12 a été transféré dans le réservoir 4, ce qui est signalé par les pesons 48, les clapets 14, 16, 18, 30 et 32 sont fermés, le dispositif mélangeur 45 est arrêté, tandis que le clapet 26 est ouvert pour aérer le réservoir 12. Après cela, les clapets 20, 38 et 40 sont ouverts pour recommencer le cycle décrit ci-dessus.

La figure 2 montre les détails du joint extensible 50 permettant d'assurer l'étanchéité entre les tubulures 52 et 54 respectivement solidaires du réservoir 12 et du réservoir 4. Comme le montre la figure, il s'agit d'un joint extensible en caoutchouc. Ce joint a une section en forme de "U" et est encastré dans un bloc annulaire 56, fixé, de façon démontable, sur une bride 58 solidaire de la tubulure 54. Deux plaques annulaires 60, 62 fixées de façon démontable, sur le bloc 56 assurent le maintien du joint 50.

L'intérieur du joint 50 communique par une conduite 64 traversant le bloc 56 avec une source de gaz sous pression 66, pouvant être de l'argon. La pression de ce gaz est d'environ 4 bars supérieurs à la pression régnant à l'intérieur du réservoir 4. L'intérieur du joint 50 peut également être aéré à travers cette même conduite 64 par des moyens non montrés pouvant être constitués par un simple clapet.

Lorsque le joint 50 est aéré il possède la forme représentée en traits pleins sur la figure, c'est-à-dire que la tubulure 54 est tout à fait indépendante de la tubulure 52 et l'espace délimité par ces deux tubulures et les deux clapets 14 et 16 se trouve sous pression atmosphérique.

Avant que les deux clapets 14 et 16 sont ouverts pour établir la communication entre le réservoir 12 et le réservoir 4 l'intérieur du joint 50 est gonflé à l'aide de la source de gaz comprimé 66. Le joint à l'état gonflé est représenté en traits pointillés. Dans cette position il est appliqué de façon étanche contre la tubulure 52 et assure l'étanchéité par rapport à l'extérieur.

Au lieu de prévoir le montage montré à la figure 2, il est également possible de monter le joint sur la tubulure intérieure et de l'appliquer, par gonflement, contre la tubulure extérieure. En outre, suivant la facilité de montage, le joint peut être monté, soit sur la tubulure supérieure 52, soit sur la tubulure inférieure 54 comme c'est le cas de la figure 2.

R E V E N D I C A T I O N S
================================

1. Dispositif de contrôle du contenu et du remplissage d'un réservoir de distribution de matière pulvérulente opérant sous pression et pourvu , du côté aval,
d'une série d'orifices d'extraction de la matière pulvérulente et relié, du côté amont, à un réservoir intermédiaire d'alimentation en matière pulvérulente, qui est
conçu comme sas pour être alternativement aéré et mis
sous une pression sensiblement égale ou supérieure à la
pression du réservoir de distribution et être mis en communication avec celui-ci, et qui est séparé du réservoir
de distribution par deux clapets, caractérisé en ce que le
réservoir de distribution (4) et le réservoir intermédiaire (12) reposent chacun sur des pesons (46, 48) produisant
des signaux correspondant au poids de leur contenu et en
ce qu'il est prévu entre les deux clapets (14), (16) un
joint réglable (50) permettant, soit de connecter les
deux réservoirs (4, 12) entre eux, de manière étanche par
rapport à l'extérieur, soit de les libérer totalement
l'un de l'autre.

2. Dispositif selon la revendication 1, caractérisé
en ce que le joint est constitué par un joint extensible
(50) prévu sur une première tubulure (54), solidaire de
l'un des réservoirs et disposée concentriquement par rapport à une deuxième tubulure (52), solidaire de l'autre
réservoir, alors qu'il est prévu des moyens (66) pour
appliquer le joint extensible de manière étanche contre
la deuxième tubulure (52).

3. Dispositif selon la revendication 2, caractérisé
en ce que la deuxième tubulure (52) contre laquelle est
appliqué le joint extensible (50) est disposée à l'intérieur du joint (50).

4. Dispositif selon la revendication 2, caractérisé
en ce que la deuxième tubulure, contre laquelle est
appliqué le joint extensible, est disposée à l'extérieur du joint extensible (50).

5. Dispositif selon l'une quelconque des revendications 2 à 4, caractérisé en ce que la première tubulure (54) est celle qui est solidaire du réservoir de distribution (4).

6. Dispositif selon l'une quelconque des revendications 2 à 4, caractérisé en ce que la première tubulure est celle qui est solidaire du réservoir intermédiaire (12).

7. Dispositif selon l'une quelconque des revendications 2 à 6, caractérisé en ce que les moyens pour appliquer le joint contre la deuxième tubulure comportent une source de gaz sous pression pour gonfler le joint (50).

8. Dispositif selon la revendication 7, caractérisé en ce que le joint (50) est en caoutchouc.

9. Dispositif selon l'une quelconque des revendications 2 à 8, caractérisé en ce que le joint est monté sur un bloc annulaire (56) et est maintenu en place par deux plaques annulaires de fixation amovibles (60, 62).

10. Dispositif selon la revendication 1, caractérisé par un mélangeur (54) prévu dans le réservoir intermédiaire (12).

0079444

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 65 G 53/66 |
| A,D | EP-A-0 021 222 (P. WURTH) | | C 21 B 5/00 |
| | --- | | |
| A | LU-A- 81 581 (P. WURTH) | | |
| | --- | | |
| A | DE-A-2 703 736 (FREIER GRUNDER EISEN- UND METALLWERKE) | | |
| | --- | | |
| A | DE-A-2 648 939 (H. HÖLTER) | | |
| | --- | | |
| A | FR-A-2 392 319 (SAARBERGWERKE) | | |
| | --- | | |
| A | DE-U-1 901 256 (SAINT-GOBAIN) | | |
| | ----- | | |

**DOMAINES TECHNIQUES RECHERCHES (Int. Cl. ³)**

B 65 G 53/66
C 21 B 5/00

Le présent rapport de recherche a été établi pour toutes les revendications

| Lieu de la recherche | Date d'achèvement de la recherche | Examinateur |
|---|---|---|
| BERLIN | 17-01-1983 | SUTOR W |